(19) **Europäisches Patentamt / European Patent Office / Office européen des brevets**

(11) **EP 3 582 405 A1**

(12) ## EUROPEAN PATENT APPLICATION
published in accordance with Art. 153(4) EPC

(43) Date of publication:
**18.12.2019  Bulletin 2019/51**

(21) Application number: **18776466.7**

(22) Date of filing: **31.01.2018**

(51) Int Cl.:
**H04B 7/0413** *(2017.01)*   **H04B 7/0456** *(2017.01)*
**H04L 25/02** *(2006.01)*

(86) International application number:
**PCT/CN2018/074696**

(87) International publication number:
**WO 2018/177022 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority:  **31.03.2017  CN 201710210742**

(71) Applicant: **Vivo Mobile Communication Co., Ltd.**
**Dongguan, Guangdong 523860 (CN)**

(72) Inventors:
 • **SHEN, Xiaodong**
  **Dongguan**
  **Guangdong 523860 (CN)**
 • **SUN, Xiaodong**
  **Dongguan**
  **Guangdong 523860 (CN)**

 • **JI, Zichao**
  **Dongguan**
  **Guangdong 523860 (CN)**
 • **LU, Zhi**
  **Dongguan**
  **Guangdong 523860 (CN)**
 • **DING, Yu**
  **Dongguan**
  **Guangdong 523860 (CN)**
 • **WU, Kai**
  **Dongguan**
  **Guangdong 523860 (CN)**

(74) Representative: **Isarpatent**
**Patent- und Rechtsanwälte Behnisch Barth
Charles
Hassa Peckmann & Partner mbB
Friedrichstrasse 31
80801 München (DE)**

(54) **METHOD AND DEVICE FOR DETERMINING PRECODING GRANULARITY**

(57)   A method and an apparatus of determining a precoding granularity are provided in embodiments of this disclosure. The method includes: in the case that a receiving end device is configured with a combination of one or more of configuration criteria, the receiving end device determining that the precoding granularity is multiple PRBs. The configuration criteria include criteria such as aggregation level. The receiving end device may perform a channel estimation precisely based on information related to the precoding granularity. In comparison with related art in which the receiving end device configures PRB bundling size based only on the system bandwidth, the mode of configuring the precoding granularity according to embodiments of this disclosure is more flexible, thereby enabling further optimization of system performance.

301

determining, by a receiving end device, that the precoding granularity is multiple PRBs, in the case that the receiving end device is configured with a combination of one or more of configuration criteria

FIG. 3

**Description**

**CROSS-REFERENCE TO RELATED APPLICATION**

The present application claims a priority of the Chinese patent application No. 201710210742.0 filed in China on March 31, 2017, a disclosure of which is incorporated herein by reference in its entirety.

**TECHNICAL FIELD**

Embodiments of the present disclosure relate to the field of communication technology, and in particular, to a method and an apparatus for determining precoding granularity.

**BACKGROUND**

By assuming at receiving end device that the transmitting end device employs the same Precoder (precoding vector) for several Physical Resource Blocks (PRBs), PRB bundling scheme enables joint channel estimation across multiple PRBs at a receiving end device, so as to improve channel estimation performance.

However, traditional technologies only configure different Precoding Resource block Group (PRG) sizes (i.e. PRB bundling size, which is the amount of PRBs for which the same Precoder is used according to the assumption at the receiving end device) for respective system bandwidths. In the case that the receiver bandwidth of User Equipment (UE) varies, the configured PRB bundling size remains unchanged, which prevents further optimization of system performance.

**SUMMARY**

In view of foregoing technical problems, embodiments of this disclosure provide a method and an apparatus of determining a precoding granularity, to facilitate the optimization of system performance.

In accordance with a first aspect of embodiments of this disclosure, a method for determining a precoding granularity is provided, the method including: determining, by a receiving end device, multiple Physical Resource Blocks (PRBs) as the precoding granularity, in the case that the receiving end device is configured with a combination of one or more of configuration criteria.

In some possible embodiments of this disclosure, the method further includes: determining, by the receiving end device, that a same precoder is used within each PRG.

In some possible embodiments of this disclosure, in the case that the receiving end device is configured with a combination of one or more of the configuration criteria, the PRG size is predefined, or the PRG size is configured by network.

In some possible embodiments of this disclosure, the configuration criteria include one or more of:

a system bandwidth;
a configured bandwidth of the receiving end device;
an RF channel bandwidth of the receiving end device;
a size of scheduled PRBs;
an aggregation level of a control channel;
a mode of resource mapping;
a mode of resource mapping from PDCCH to CCE, only suitable for determining a PRG size of a control channel;
a mode of resource mapping from CCE to REG, only suitable for determining a PRG size of a control channel;
a mode of data mapping, only suitable for determining a PRG size of a data channel;
an MIMO transmission mode;
an OFDM waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

In accordance with a second aspect of embodiments of this disclosure, a method for determining a precoding granularity is provided, the method including: performing, by a transmitting end device, a precoding operation on signals transmitted to a receiving end device by using a precoding granularity corresponding to multiple PRBs, in the case that the receiving end device is configured with a combination of one or more of configuration criteria.

In some possible embodiments of this disclosure, the method further includes: determining, by the transmitting end device, that a same precoder is used within each PRG in the precoding on signals transmitted to the receiving end device.

In some possible embodiments of this disclosure, in the case that the receiving end device is configured with a combination of one or more of the configuration criteria, the PRG size is predefined, or the PRG size is configured by network.

In some possible embodiments of this disclosure, the configuration criteria include one or more of:

a system bandwidth;
a configured bandwidth of the receiving end device;
an RF channel bandwidth of the receiving end device;
a size of scheduled PRBs;
an aggregation level of a control channel, only suitable for determining a PRG size of the control channel;
a mode of resource mapping;
a mode of resource mapping from PDCCH to CCE, only suitable for determining a PRG size of a control channel;
a mode of resource mapping from CCE to REG, only suitable for determining a PRG size of a control channel;
a mode of data mapping, only suitable for determining a PRG size of a data channel;
an MIMO transmission mode;
an OFDM waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

In accordance with a third aspect of embodiments of this disclosure, an apparatus for determining a precoding granularity is provided, which is applied to a receiving end device and includes: a first processing module, configured to, in the case that the receiving end device is configured with a combination of one or more of configuration criteria, determine multiple Physical Resource Blocks (PRBs) as the precoding granularity.

In some possible embodiments of this disclosure, the apparatus further includes: a second processing module, configured to determine that a same precoder is used within each PRG.

In some possible embodiments of this disclosure, in the case that the receiving end device is configured with a combination of one or more of the configuration criteria, the PRG size is predefined, or the PRG size is configured by network.

In some possible embodiments of this disclosure, the configuration criteria include one or more of:

a system bandwidth;
a configured bandwidth of the receiving end device;
an RF channel bandwidth of the receiving end device;
a size of scheduled PRBs;
an aggregation level of a control channel;
a mode of resource mapping;
a mode of resource mapping from PDCCH to CCE, only suitable for determining a PRG size of a control channel;
a mode of resource mapping from CCE to REG, only suitable for determining a PRG size of a control channel;
a mode of data mapping, only suitable for determining a PRG size of a data channel;
an MIMO transmission mode;
an OFDM waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

In accordance with a fourth aspect of embodiments of this disclosure, an apparatus for determining a precoding granularity is further provided, which is applied to a transmitting end device and includes: a third processing module, configured to, in the case that a receiving end device is configured with a combination of one or more of configuration criteria, perform a precoding operation on signals transmitted to the receiving end device by using the precoding granularity corresponding to multiple PRBs.

In some possible embodiments of this disclosure, the apparatus further includes: a fourth processing module, configured to determine that a same precoder is used within each PRG in the precoding on signals transmitted to the receiving end device.

In some possible embodiments of this disclosure, in the case that the receiving end device is configured with a combination of one or more of the configuration criteria, the PRG size is predefined, or the PRG size is configured by network.

In some possible embodiments of this disclosure, the configuration criteria include one or more of:

a system bandwidth;
a configured bandwidth of the receiving end device;
an RF channel bandwidth of the receiving end device;
a size of scheduled PRBs;
an aggregation level of a control channel, only suitable for determining a PRG size of the control channel;
a mode of resource mapping;
a mode of resource mapping from PDCCH to CCE, only suitable for determining a PRG size of a control channel;
a mode of resource mapping from CCE to REG, only suitable for determining a PRG size of a control channel;
a mode of data mapping, only suitable for determining a PRG size of a data channel;
an MIMO transmission mode;
an OFDM waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

In accordance with a fifth aspect of embodiments of this disclosure, a receiving end device is provided, including: a first storage, a first processor and a computer program stored on the first storage and configured to be executed by the first processor, where the first processor is configured to execute the computer program, to implement steps of the method of determining the precoding granularity as described in the first aspect.

In accordance with a sixth aspect of embodiments of this disclosure, a transmitting end device is provided, including: a second storage, a second processor and a computer program stored on the second storage and configured to be executed by the second processor, where the second processor is configured to execute the computer program, to implement steps of the method of determining the precoding granularity as described in the second aspect.

In accordance with a seventh aspect of embodiments of this disclosure, a computer-readable storage medium storing therein a computer program is further provided, where the computer program is configured to be executed by a processor, to implement steps of the method of determining the precoding granularity as described in the first aspect or the second aspect.

One of foregoing technical solutions has advantages or beneficial effects as follows: in the case that a receiving end device is configured with a combination of one or more of configuration criteria, the receiving end device may determine that the precoding granularity is multiple PRBs, such that the receiving end device may perform a channel estimation operation precisely based on information related to the precoding granularity. In comparison with related art in which the receiving end device configures PRB bundling size only based on the system bandwidth, the mode of configuring the precoding granularity according to embodiments of this disclosure is more flexible, thereby enabling further optimization of system performance.

**BRIEF DESCRIPTION OF THE DRAWINGS**

To better clarify technical solutions of embodiments of this disclosure or technical solutions of related art, drawings used in description of the embodiments are briefly introduced hereinafter. Apparently, the described drawings merely illustrate a part of the disclosed embodiments. A person ordinary skilled in the art can obtain other drawings based on the described drawings without any creative efforts.

FIG. 1A to FIG. 1D are respectively schematic diagrams of rules for mapping from CCE to REG and mapping from PDCCH to CCE;
FIG. 2A is a schematic diagram of Single Precoder;
FIG. 2B is a schematic diagram of Precoder Cycling;
FIG. 3 is a flow diagram of a method for determining a precoding granularity according to an embodiment of this disclosure;

FIG. 4 is a schematic diagram of bandwidth configurations at network side and UE side;

FIG. 5 is a flow diagram of a method for determining a precoding granularity according to another embodiment of this disclosure;

FIG. 6A and FIG. 6B are schematic diagrams of resource mapping in a time-domain-first manner;

FIG. 7 is a structural diagram of an apparatus for determining a precoding granularity according to an embodiment of this disclosure;

FIG. 8 is a structural diagram of an apparatus for determining a precoding granularity according to another embodiment of this disclosure;

FIG. 9 is a structural diagram of a receiving end device according to an embodiment of this disclosure;

FIG. 10 is a structural diagram of a transmitting end device according to an embodiment of this disclosure.

## DETAILED DESCRIPTION

To describe the technical problem to be solved, the technical solutions and the advantages of this disclosure more clearly, embodiments are described in detail hereinafter with reference to the accompanying drawings. Hereinafter, specific details such as configurations and components are provided in order to merely facilitate the comprehensive understanding of the embodiments of this disclosure. Therefore, it is appreciated, modifications may be made by a person of ordinary skill in the art in the embodiments without departing from the scope and principle of this disclosure. Further, for clarity and conciseness, descriptions of known functions and constructions are omitted.

PRB bundling size is specified in 3GPP Release 10 (R-10), referring to the following Table 1:

Table 1

| System Bandwidth ($N_{\mathrm{RB}}^{\mathrm{DL}}$) | PRG size ($P'$)(PRBs) |
|---|---|
| $\leq 10$ | 1 |
| 11 - 26 | 2 |
| 27 - 63 | 3 |
| 64 - 110 | 2 |

According to LTE, the PRG size is only dependent on system bandwidth and transmission mode, i.e., in certain transmission mode (as in TS36.213V10.13.0, only transmission mode 9 is supported), the PRG size may be determined after system bandwidth is determined.

However, things are different according to the control channel design of 5G NR (New Radio).

(1) First, due to a stringent requirement on reliability on the part of control channel, PRB bundling is required to improve reception performance. Since the 5G NR control channel may occupy only 1 to 2 columns of symbols in time domain, a receiving time is short, thereby deteriorating the reception performance of the control channel. As a result, in order to improve performance, supporting for PRB bundling is necessary.

(2) Second, resource mapping schemes of 5G NR may be categorized into localized mapping and distributed mapping, i.e., data mapped to actual physical resources may be localized at a series of consecutive frequency resources or distributed at multiple discontinued segments of resources in frequency domain. The specific mapping schemes may be different from Long Term Evolution (LTE), therefore an improved PRB bundling scheme is needed to improve reception performance.

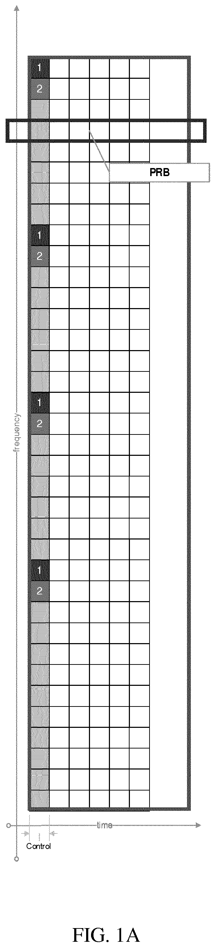

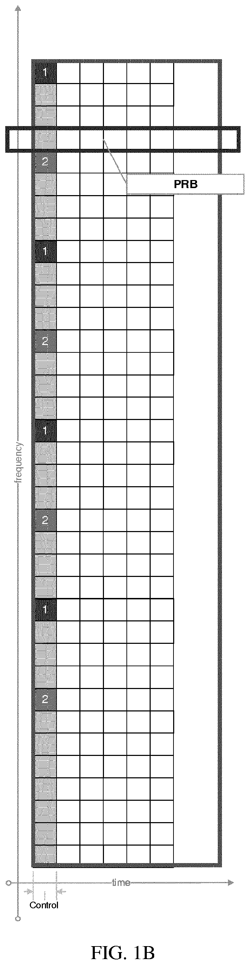

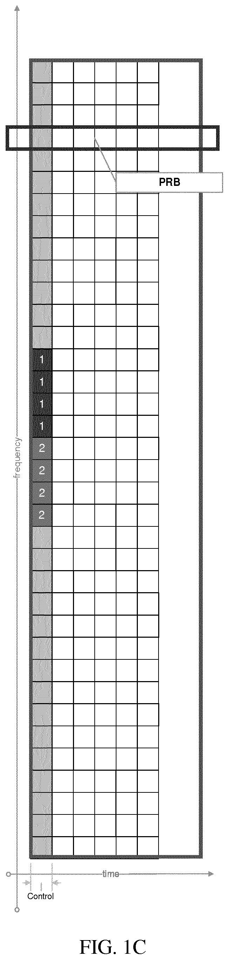

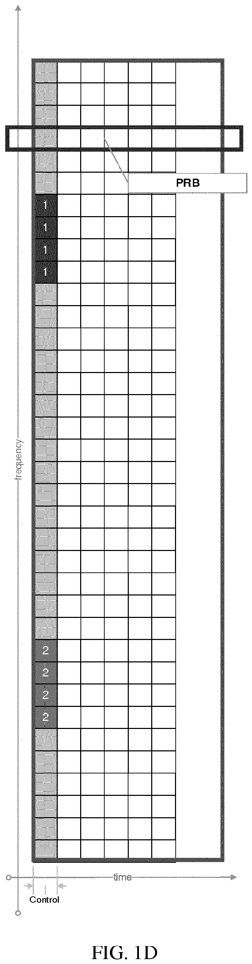

In practice, there may be resource mapping modes for the control channel, as illustrated in the following Table 2 and FIG. 1A to FIG. ID.

Table 2

| | NR-PDCCH(Physical Downlink Control Channel)-to-CCE (Control Channel Element) mapping | CCE-to-REG(Resource Element Group) mapping |
|---|---|---|
| option 1: | localized | distributed |
| option 2: | distributed | distributed |
| option3: | localized | localized |

(continued)

|  | NR-PDCCH(Physical Downlink Control Channel)-to-CCE (Control Channel Element) mapping | CCE-to-REG(Resource Element Group) mapping |
| --- | --- | --- |
| option4: | distributed | localized |

Since one Physical Downlink Control Channel (PDCCH) is made up of one or more Control Channel Elements (CCEs) and one CCE is made up of multiple Resource Element Groups (REGs), combinations of mapping from PDCCH to CCE and mapping from CCE to REG are enumerated in FIG. 1A to FIG. 1D respectively.

It is noted, in FIG. 1A to FIG. ID, blocks containing number "1" denote CCE1 and blocks containing number "2" denote CCE2. A collection of blocks with the same number represents one CCE, and the collection of CCEs with the same number represents a location where the PDCCH may be searched out.

(3) Third, 5G NR may introduce a new MIMO diversity transmission scheme such as Precoding Cycling (also known as Random Beamforming) for control channel or data channel, which is different from Space Frequency Block Code (SFBC) MIMO diversity transmission scheme employed in LTE too. A difference in performance between the schemes leads to different requirements on PRB bundling.

A background introduction to the Precoding Cycling is provided hereinafter.

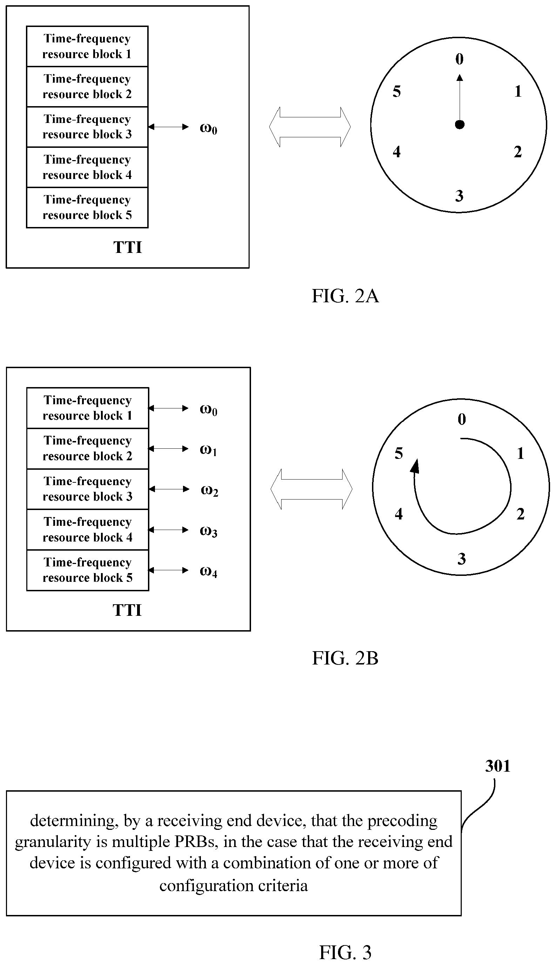

Referring to FIG. 2A, traditional beamforming transmission method, such as those based on the fed-back Channel State Information (CSI), selects an optimal beamforming vector (Precoder) to transmit data. An advantage thereof consists in that the beamforming vector may be adjusted according to channel condition and as a result a favorable performance can generally be guaranteed. However, in practice, in the case that the channel is subject to a flexible frequency selectivity, a low Signal to Noise Ratio (SNR), a remarkable channel time-variation, etc., the performance of a feedback-based beamforming method will be hampered.

In the beamforming process using Precoding Cycling (also known as Random Beamforming), the precoding information may be transparent or non-transparent to User Equipment (UE, also called terminal). In case that the precoding information is transparent to UE, the cell may alter the precoding freely, e.g., to improve the reception reliability of control information by beamforming, at its own discretion without notifying UE explicitly. Referring to FIG. 2B, different beamforming vectors may be used for respective resource blocks, such that system performance won't be impacted negatively by a poorly selected beamforming vector, thereby improving robustness.

Hereinafter, the exemplary embodiments of this disclosure are described in detail with reference to the accompanying drawings. Although the exemplary embodiments of this disclosure are illustrated in the accompanying drawings, it is understood, the disclosure may be embodied in many different forms and should not be construed as being limited to the embodiments set forth herein. Rather, these embodiments are provided so that this disclosure will be thorough, and will fully convey the scope of this disclosure to those skilled in the art.

Referring to FIG. 3, a flow diagram of a method for determining a precoding granularity according to an embodiment of this disclosure is illustrated. The method may be performed by a receiving end device and includes the following steps.

Step 301, determining, by a receiving end device, multiple PRBs as the precoding granularity, in the case that the receiving end device is configured with a combination of one or more of configuration criteria.

For example, in the case that the receiving end device is configured with a combination of one or more of configuration criteria, the receiving end device determines that the precoding granularity is (contains), but not limited to: two, three, four, five or six PRBs. It is noted, a specific quantity of the PRBs is not limited in this embodiment.

In this embodiment, the receiving end device may perform a channel estimation precisely based on information related to the precoding granularity. In comparison with related art in which the receiving end device configures PRB bundling size based only on the system bandwidth, the mode of configuring the precoding granularity according to embodiments of this disclosure is more flexible, thereby enabling further optimization of system performance.

In this embodiment, In some possible embodiments of this disclosure, the method of determining the precoding granularity further includes: determining, by the receiving end device, that a same precoder is used within each PRG. For example, the PRG includes one or more precoding granularities.

It is noted, in this embodiment, the specific precoding method is not limited and a quantity of precoding granularities within a PRG is not limited either.

In this embodiment, In some possible embodiments of this disclosure, in the case that the receiving end device is configured with a combination of one or more of the configuration criteria, the PRG size may be predefined, e.g., predefined by protocol, or the PRG size may be configured by network.

In this embodiment, the configuration criteria include one or more of:

(1) a system bandwidth;

(2) a configured bandwidth of the receiving end device;

(3) an RF channel bandwidth of the receiving end device;

(4) a size of scheduled PRBs;

(5) an aggregation level of a control channel;

(6) a mode of resource mapping, e.g., localized mapping or distributed mapping;

(7) a mode of resource mapping from PDCCH to CCE, only suitable for determining a PRG size of a control channel, e.g., localized mapping or distributed mapping;

(8) a mode of resource mapping from CCE to REG, only suitable for determining a PRG size of a control channel, e.g., localized mapping or distributed mapping;

(9) a mode of data mapping, only suitable for determining a PRG size of a data channel, e.g., localized mapping or distributed mapping;

(10) an MIMO transmission mode;

(11) an OFDM waveform being used;

(12) specific parameters of the OFDM waveform being used, e.g., subcarrier spacing and sub-frame length;

(13) a signaling format of a control channel, only suitable for determining a PRG size of the control channel;

(14) a quantity of symbols occupied by a control channel, only suitable for determining a PRG size of the control channel; and

(15) a quantity of symbols occupied by a search space, only suitable for determining a PRG size of a control channel.

In this embodiment, these configuration criteria include aggregation level and the like.

Wherein, the aggregation level refers to: resources occupied by PDCCH are measured in units of CCE, one CCE includes a combination of several REGs, and one REG includes a combination of several REs. A gNB may select to use 1, 2, 4 or 8 (the specific quantity is not limited thereto) CCEs to carry one downlink control signaling, and the quantity of used CCEs is referred to as aggregation level (AL).

In this embodiment, the transmitting end device and the receiving end device may correspond to a gNB and a UE respectively. Of course, the embodiment is not limited thereto, for example, the transmitting end device and the receiving end device may correspond to two UEs respectively, or correspond to a UE and a gNB respectively, or correspond to two gNBs respectively.

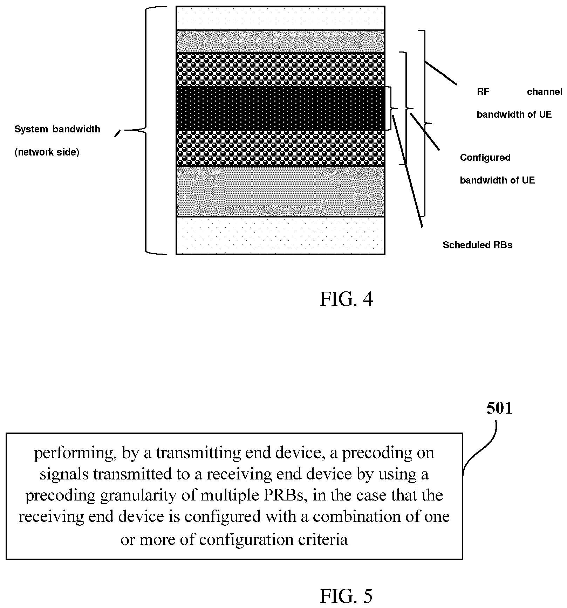

For description of the difference between aforementioned criteria (1) to (4), refer to FIG. 4.

A description of aforementioned criterion (11) is as follows: current LTE systems employ Cyclic Prefix (CP)-OFDM waveform for downlink transmission and employ DFT-S-OFDM waveform for uplink transmission. A difference of DFT-S-OFDM from CP-OFDM lies in that in DFT-S-OFDM, signals are DFT spreaded prior to an IFFT modulation for the OFDM. In this way, signals transmitted by the system are in time domain, thereby obviating the Peak to Average Power Ratio (PAPR) problem resulting from transmission of frequency-domain OFDM signals.

The system may configure different PRG sizes for transmission using CP-OFDM waveform and transmission using DFT-S-OFDM waveform respectively, to optimize transmission performance.

A description of aforementioned criterion (12) is as follows: since OFDM system is a multi-carrier transmission system, a frequency-domain spacing between subcarriers should be provided, which is often 15kHz for data transmission in LTE. For some special applications, such as Multimedia Broadcast Multicast Service (MBMS), a subcarrier spacing of 7.5 kHz may be provided.

In NR system, for more flexibility, different subcarrier spacings may be provided for respective users and services. For example, subcarrier spacing n is a nonnegative integer.

Due to a difference in channel estimation performance, different PRG sizes may be configured for respective subcarrier spacings.

A description of aforementioned criterion (13) is as follows: in LTE, Downlink Control Indication (DCI) carried by a downlink control channel may assume a plurality of distinct formats, as shown in the following Table 3:

Table 3

| DCI Format | Usage |
| --- | --- |
| Format 0 | UL Grant. Resource Allocation for UL Data |
| Format 1 | DL Assignment for single codeword PDSCH transmission |
| Format 1A | DL Assignment for single codeword PDSCH transmission (compact size) |
| Format 1B | DL Assignment for two codeword PDSCH transmission with Rank 1 |
| Format 1C | DL Assignment for single codeword PDSCH transmission (very compact size) |

(continued)

| DCI Format | Usage |
| --- | --- |
| Format 1D | DL Assignment for Multi User MIMO |
| Format 2 | DL Assignment for Closed Loop MIMO |
| Format 2A | DL Assignment for Open Loop MIMO |
| Format 2B | DL Assignment for TM8 (Dual Layer Beamforming) |
| Format 2C | DL Assignment for TM9 |
| Format 3 | TPC Commands for PUCCH and PUSCH with 2 bit power adjustment |
| Format 3A | TPC Commands for PUCCH and PUSCH with 1 bit power adjustment |
| Format 4 | UL Assignment for UL MIMO (up to 4 layers) |

It can be seen that, DCIs in the various formats have distinct purposes and destinations. Some formats are destined for a certain UE alone, such as format 1A; while some other formats may be received and used by plural UEs, such as DCI format 3/3A used for group power control.

Therefore, different PRG sizes should be configured for these respective DCI formats.

A description of criteria (14) and (15) is as follows: in LTE, in order to receive a control channel, a quantity of symbols in time domain occupied by the control channel should be determined.

For the future NR system, the aforementioned criterion (14) refers to the quantity of symbols in time domain occupied by the control channel; while the aforementioned criterion (15) refers to the quantity of symbols in time domain occupied by a search space of the control channel for a certain UE/the control channels for a certain group of UEs.

Referring to FIG. 5, a flow diagram of a method for determining a precoding granularity according to another embodiment of this disclosure is illustrated. The method may be performed by a transmitting end device and includes the following steps.

Step 501, performing, by a transmitting end device, a precoding on signals transmitted to a receiving end device by using the precoding granularity corresponding to multiple PRBs, in the case that the receiving end device is configured with a combination of one or more of configuration criteria.

For example, in the case that the receiving end device is configured with a combination of one or more of configuration criteria, the transmitting end device performs a precoding on signals transmitted to the receiving end device by using a precoding granularity of, but not limited to: two, three, four, five or six PRBs. It is noted, a specific quantity of the PRBs is not limited in this embodiment.

In this embodiment, the receiving end device may perform a channel estimation operation precisely based on information related to the precoding granularity. In comparison with related art in which the receiving end device configures PRB bundling size only based on the system bandwidth, the mode of configuring the precoding granularity according to embodiments of this disclosure is more flexible, thereby enabling further optimization of system performance.

In some possible embodiments of this disclosure, the method of determining the precoding granularity further includes: determining, by the transmitting end device, that a same precoder is used within each PRG in the precoding on signals transmitted to the receiving end device. For example, the PRG includes one or more precoding granularities.

In some possible embodiments of this disclosure, in the case that the receiving end device is configured with a combination of one or more of the configuration criteria, the PRG size may be predefined, e.g., predefined by protocol, or the PRG size may be configured by network.

In this embodiment, the configuration criteria include one or more of:

(1) a system bandwidth;
(2) a configured bandwidth of the receiving end device;
(3) an RF channel bandwidth of the receiving end device;
(4) a size of scheduled PRBs;
(5) an aggregation level of a control channel;
(6) a mode of resource mapping, e.g., localized mapping or distributed mapping;
(7) a mode of resource mapping from PDCCH to CCE, only suitable for determining a PRG size of a control channel, e.g., localized mapping or distributed mapping;
(8) a mode of resource mapping from CCE to REG, only suitable for determining a PRG size of a control channel, e.g., localized mapping or distributed mapping;
(9) a mode of data mapping, only suitable for determining a PRG size of a data channel, e.g., localized mapping or distributed mapping;

(10) an MIMO transmission mode;

(11) an OFDM waveform being used;

(12) specific parameters of the OFDM waveform being used, e.g., subcarrier spacing and sub-frame length;

(13) a signaling format of a control channel, only suitable for determining a PRG size of the control channel;

(14) a quantity of symbols occupied by a control channel, only suitable for determining a PRG size of the control channel; and

(15) a quantity of symbols occupied by a search space, only suitable for determining a PRG size of a control channel.

In this embodiment, these configuration criteria include aggregation level and the like.

Wherein, the aggregation level refers to: resources occupied by PDCCH are measured in units of CCE, one CCE includes a combination of several REGs, and one REG includes a combination of several REs. A gNB may select to use 1, 2, 4 or 8 (the specific quantity is not limited thereto) CCEs to carry one downlink control signaling, and the quantity of used CCEs is referred to as aggregation level (AL).

In this embodiment, the transmitting end device and the receiving end device may correspond to a gNB and a UE respectively. Of course, the embodiment is not limited thereto, for example, the transmitting end device and the receiving end device may correspond to two UEs respectively, or correspond to a UE and a gNB respectively, or correspond to two gNBs respectively.

In an embodiment of this disclosure, according to some simulation evaluation results, it is preferable to perform, in a distributed mapping or localized mapping for a control channel, PRB bundling as follows (different tables may be provided for different resource mapping modes), as shown in Table 4:

Table 4

| Distributed mapping | | Localized mapping | |
|---|---|---|---|
| Control channel aggregation level | PRG Size ($P'$)(PRBs) | Control channel aggregation level | PRG Size ($P'$)(PRBs) |
| 1 | 1 | 1 | 1 |
| 2 | 2 | 2 | 1 |
| 4 | 2 | 4 | 2 |
| 8 | 4 | 8 | 4 |

In another embodiment of this disclosure, different PRG sizes may be configured in accordance with a size of all scheduled PRBs. The size of scheduled PRBs may be computed in consideration of the following: (1) a size of PRBs occupied by data channel transmission; (2) a size of PRBs occupied by control channel transmission; or (3) an overall size of PRBs occupied by data channel transmission and PRBs occupied by control channel transmission.

In another embodiment of this disclosure, taking Downlink Control Indication (DCI) carried by the downlink control channel in LTE for example, as shown in Table 5, the DCI may assume various formats as follows:

Table 5

| DCI Format | usage |
|---|---|
| Format 0 | UL Grant. Resource Allocation for UL Data |
| Format 1 | DL Assignment for SISO |
| Format 1A | DL Assignment for SISO (compact) |
| Format 1B | DL Assignment for MIMO with Rank 1 |
| Format 1C | DL Assignment for SISO (minimum size) |
| Format 1D | DL Assignment for Multi User MIMO |
| Format 2 | DL Assignment for Closed Loop MIMO |
| Format 2A | DL Assignment for Open Loop MIMO |
| Format 2B | DL Assignment for TM8 (Dual Layer Beamforming) |
| Format 2C | DL Assignment for TM9 |

(continued)

| DCI Format | usage |
|---|---|
| Format 3 | TPC Commands for PUCCH and PUSCH with 2 bit power adjustment |
| Format 3A | TPC Commands for PUCCH and PUSCH with 1 bit power adjustment |
| Format 4 | UL Assignment for UL MIMO (up to 4 layers) |

It can be seen that, DCIs in the various formats have distinct purposes and destinations. Some formats are destined for a certain UE alone, such as format 1A; while some other formats may be received and used by plural UEs, such as DCI format 3/3A used for group power control.

Therefore, different PRG sizes should be configured for these respective DCI formats.

In another embodiment of this disclosure, different PRG sizes are configured for respective aggregation levels and respective quantities of symbols in time domain occupied by the control channel: in some configuration conditions in which a control channel occupies one OFDM symbol and aggregation level may vary, a variation in PRG size may bring forth a better UE reception performance; and in the case that the control channel occupies multiple symbols, for resource mapping modes in some conditions, it is also necessary to adjust the PRG size correspondingly.

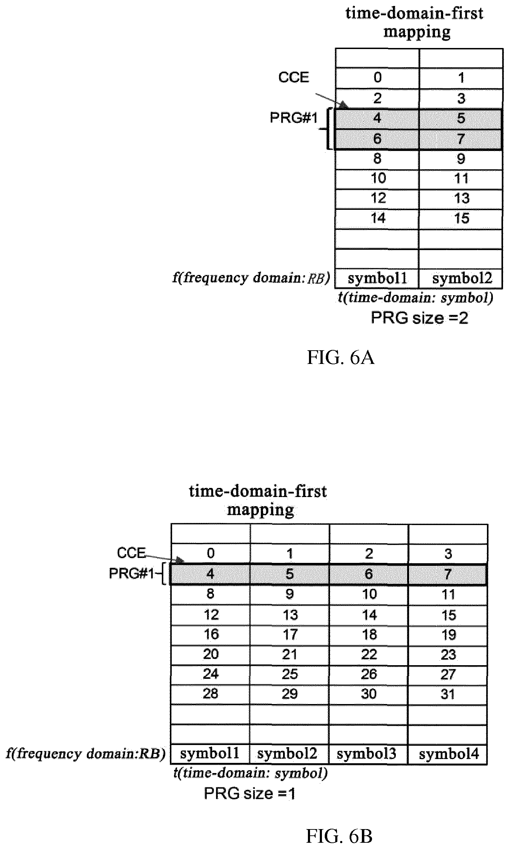

For example, for a mapping from CCE to REG, a mapping mode of time-domain-first-and-then-frequency-domain is used. As shown in FIG. 6A and FIG. 6B, in the case that variable quantities of symbols in time domain are occupied by the control channel, the PRG size may be modified or adjusted according to the occupied frequency domain resources.

Based on the same inventive concept, embodiments of this disclosure further provide an apparatus for determining a precoding granularity. Since the problem-solving principle of the apparatus is similar to the method for determining a precoding granularity as shown in FIG. 3 according to embodiments of this disclosure, the implementation of the apparatus may be learned by referring to the implementation of the method, thus a repeated description is omitted.

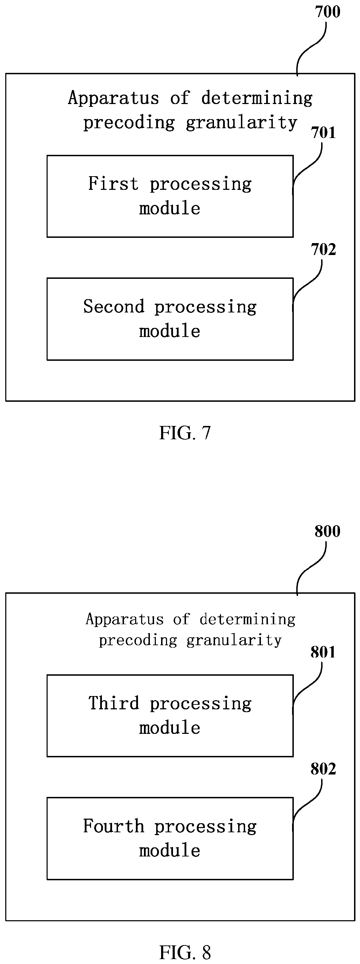

Referring to FIG. 7, an apparatus 700 for determining a precoding granularity according to an embodiment of this disclosure is illustrated. The apparatus 700 is applicable to a receiving end device and includes: a first processing module 701, configured to, in the case that the receiving end device is configured with a combination of one or more of configuration criteria, determine multiple PRBs as the precoding granularity.

Again referring to FIG. 7, the apparatus 700 further includes: a second processing module 702, configured to determine that a same precoder is used within each PRG. For example, the PRG includes one or more precoding granularities.

In some possible embodiments of this disclosure, in the case that the receiving end device is configured with a combination of one or more of the configuration criteria, the PRG size may be predefined, e.g., predefined by protocol, or the PRG size may be configured by network.

In this embodiment, the configuration criteria include one or more of:

(1) a system bandwidth;
(2) a configured bandwidth of the receiving end device;
(3) an RF channel bandwidth of the receiving end device;
(4) a size of scheduled PRBs;
(5) an aggregation level of a control channel;
(6) a mode of resource mapping, e.g., localized mapping or distributed mapping;
(7) a mode of resource mapping from PDCCH to CCE, only suitable for determining a PRG size of a control channel, e.g., localized mapping or distributed mapping;
(8) a mode of resource mapping from CCE to REG, only suitable for determining a PRG size of a control channel, e.g., localized mapping or distributed mapping;
(9) a mode of data mapping, only suitable for determining a PRG size of a data channel, e.g., localized mapping or distributed mapping;
(10) an MIMO transmission mode;
(11) an OFDM waveform being used;
(12) specific parameters of the OFDM waveform being used, e.g., subcarrier spacing and sub-frame length;
(13) a signaling format of a control channel, only suitable for determining a PRG size of the control channel;
(14) a quantity of symbols occupied by a control channel, only suitable for determining a PRG size of the control channel; and
(15) a quantity of symbols occupied by a search space, only suitable for determining a PRG size of a control channel.

In this embodiment, these configuration criteria include aggregation level and the like.

Wherein, the aggregation level refers to: resources occupied by PDCCH are measured in units of CCE, one CCE includes a combination of several REGs, and one REG includes a combination of several REs. gNB may select to use 1, 2, 4 or 8 (the specific quantity is not limited thereto) CCEs to carry one downlink control signaling, and the quantity of used CCEs is referred to as aggregation level (AL).

Based on the same inventive concept, embodiments of this disclosure further provide an apparatus of determining a precoding granularity. Since the problem-solving principle of the apparatus is similar to the method of determining a precoding granularity as shown in FIG. 5 according to embodiments of this disclosure, the implementation of the apparatus may be learned by referring to the implementation of the method, thus a repeated description is omitted.

Referring to FIG. 8, an apparatus 800 for determining a precoding granularity according to another embodiment of this disclosure is illustrated. The apparatus 800 is applicable to a transmitting end device and includes: a third processing module 801, configured to, in the case that a receiving end device is configured with a combination of one or more of configuration criteria, perform a precoding operation on signals transmitted to the receiving end device by using the precoding granularity corresponding to multiple PRBs.

Continuing referring to FIG. 8, the apparatus 800 further includes: a fourth processing module 802, configured to determine that a same precoder is used within each PRG in the precoding on signals transmitted to the receiving end device. For example, the PRG includes one or more precoding granularities.

In some possible embodiments of this disclosure, in the case that the receiving end device is configured with a combination of one or more of the configuration criteria, the PRG size is predefined, or the PRG size is configured by network.

In this embodiment, the configuration criteria include one or more of:

(1) a system bandwidth;
(2) a configured bandwidth of the receiving end device;
(3) an RF channel bandwidth of the receiving end device;
(4) a size of scheduled PRBs;
(5) an aggregation level of a control channel;
(6) a mode of resource mapping, e.g., localized mapping or distributed mapping;
(7) a mode of resource mapping from PDCCH to CCE, only suitable for determining a PRG size of a control channel, e.g., localized mapping or distributed mapping;
(8) a mode of resource mapping from CCE to REG, only suitable for determining a PRG size of a control channel, e.g., localized mapping or distributed mapping;
(9) a mode of data mapping, only suitable for determining a PRG size of a data channel, e.g., localized mapping or distributed mapping;
(10) an MIMO transmission mode;
(11) an OFDM waveform being used;
(12) specific parameters of the OFDM waveform being used, e.g., subcarrier spacing and sub-frame length;
(13) a signaling format of a control channel, only suitable for determining a PRG size of the control channel;
(14) a quantity of symbols occupied by a control channel, only suitable for determining a PRG size of the control channel; and
(15) a quantity of symbols occupied by a search space, only suitable for determining a PRG size of a control channel.

In this embodiment, these configuration criteria include aggregation level and the like.

Wherein, the aggregation level refers to: resources occupied by PDCCH are measured in units of CCE, one CCE includes a combination of several REGs, and one REG includes a combination of several REs. gNB may select to use 1, 2, 4 or 8 (the specific quantity is not limited thereto) CCEs to carry one downlink control signaling, and the quantity of used CCEs is referred to as aggregation level (AL).

Embodiments of this disclosure further provide a receiving end device, including: a first storage, a first processor and a computer program stored on the first storage and configured to be executed by the first processor, where the first processor is configured to execute the computer program, to implement steps of the method of determining the precoding granularity as shown in FIG. 3.

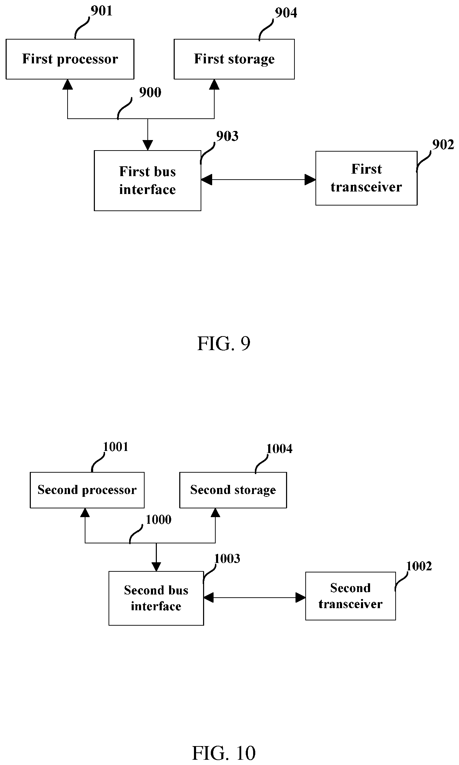

Referring to FIG. 9, a structure of a receiving end device is illustrated. The receiving end device includes: a first storage, a first processor and a computer program stored on the first storage and configured to be executed by the first processor, where the first processor is configured to execute the computer program, to implement the following step: in the case that the receiving end device is configured with a combination of one or more of configuration criteria, determine that the precoding granularity is multiple PRBs.

In FIG. 9, a bus architecture (represented by a first bus 900) may include any number of interconnected buses and bridges, and the first bus 900 connects various circuits including one or more processors represented by the first processor 901 and storages represented by the first storage 904. The first bus 900 may also connect various other circuits such as peripherals, voltage regulators and power management circuits, which is well known in the art. Therefore, a detailed description thereof is omitted herein. A first bus interface 903 acts as an interface between the first bus 900 and the first transceiver 902. The first transceiver 902 may be one or more elements, such as multiple receivers and transmitters, to allow for communication with various other apparatuses on the transmission medium. For example, the first transceiver 902 receives external data from other devices. The first transceiver 902 is configured to transmit data processed by the first processor 901 to other devices. Depending on the properties of the computation system, user interfaces such as keypad, display, speaker, microphone and joystick may be provided as well.

The first processor 901 is responsible for supervising the first bus 900 and normal operation, such as running a general purpose operating system. And the first storage 904 may be configured to store the data being used by the first processor 901 during operation.

In some possible embodiments of this disclosure, the first processor 901 may be a CPU, Application Specific Integrated Circuit (ASIC), Field Programmable Gate Array (FPGA) or Complex Programmable Logic Device (CPLD).

In some possible embodiments of this disclosure, the first processor 901 is further configured to determine that a same precoder is used within each PRG. For example, the PRG includes one or more precoding granularities.

In some possible embodiments of this disclosure, in the case that the receiving end device is configured with a combination of one or more of the configuration criteria, the PRG size is predefined, or the PRG size is configured by network.

Embodiments of this disclosure further provide a transmitting end device, including: a second storage, a second processor and a computer program stored on the second storage and configured to be executed by the second processor, where the second processor is configured to execute the computer program, to implement steps of the method for determining the precoding granularity as shown in FIG. 5.

Referring to FIG. 10, a structure of a transmitting end device is illustrated. The transmitting end device includes: a second storage, a second processor and a computer program stored on the second storage and configured to be executed by the second processor, where the second processor is configured to execute the computer program, to implement the following step: performing a precoding operation on signals transmitted to a receiving end device by using the precoding granularity corresponding to multiple PRBs, in the case that the receiving end device is configured with a combination of one or more of configuration criteria.

In FIG. 10, a bus architecture (represented by a second bus 1000) may include any number of interconnected buses and bridges, and the second bus 1000 connects various circuits including one or more processors represented by the second processor 1001 and storages represented by the second storage 1004. The second bus 1000 may also connect various other circuits such as peripherals, voltage regulators and power management circuits, which is well known in the art. Therefore, a detailed description thereof is omitted herein. A second bus interface 1003 acts as an interface between the second bus 1000 and the second transceiver 1002. The second transceiver 1002 may be one or more elements, such as multiple receivers and transmitters, to allow for communication with various other apparatuses on the transmission medium. For example, the second transceiver 1002 receives external data from other devices. The second transceiver 1002 is configured to transmit data processed by the second processor 1001 to other devices. Depending on the properties of the computation system, user interfaces 1005 such as keypad, display, speaker, microphone and joystick may be provided as well.

The second processor 1001 is responsible for supervising the second bus 1000 and normal operation, such as running a general purpose operating system. And the second storage 1004 may be configured to store the data being used by the second processor 1001 during operation.

In some possible embodiments of this disclosure, the second processor 1001 may be a CPU, Application Specific Integrated Circuit (ASIC), Field Programmable Gate Array (FPGA) or Complex Programmable Logic Device (CPLD).

In some possible embodiments of this disclosure, the second processor 1001 is further configured to determine that a same precoder is used within each PRG. For example, the PRG includes one or more precoding granularities.

In some possible embodiments of this disclosure, in the case that the receiving end device is configured with a combination of one or more of the configuration criteria, the PRG size is predefined, or the PRG size is configured by network.

Embodiments of this disclosure further provide a computer readable storage medium storing therein a computer program (instructions), where the computer program (instructions) is configured to be executed by a processor, to implement steps of the method of determining the precoding granularity as shown in FIG. 3 or FIG. 5.

It is understood, "one embodiment" or "an embodiment" mentioned throughout the specification mean specific features, structures or characteristics related to the embodiment are included in at least one embodiment of this disclosure. Therefore, "in one embodiment" or "in an embodiment" mentioned throughout the specification does not necessarily refer to the same embodiment. Additionally, these specific features, structures or characteristics may be combined in any suitable manner in one or more embodiments.

In various embodiments of this disclosure, it is understood, the numbering of various processes is not intended to imply an execution sequence. The execution sequence of the processes should be determined in accordance with the functions and inherent logic thereof, and by no means constitutes any limitation as to the implementation of the embodiments of this disclosure.

Additionally, the terms "system" and "network" are often interchangeable herein.

It is understood, the term "and/or" as used herein merely refers to an association relationship between objects to be associated and means there is three possibilities. For example, A and/or B may represent: only A exists, both A and B exist, and only B exists. Additionally, the symbol "/" as used herein generally represents there is a "or" relationship between the objects to be associated.

In the embodiments provided in this application, it is understood, expression "B corresponding to A" represents that B is associated with A and B may be determined according to A. however, it is further understood, B being determined according to A does not mean B is determined exclusively according to A, rather, B may be determined according A and/or other information.

In the several embodiments provided in this application, it should be understood that the disclosed method and device may be implemented in other manners. For example, the described device embodiment is merely exemplary. For example, the unit division is merely logical function division and may be other division in actual implementation. For example, a plurality of units or components may be combined or integrated into another system, or some features may be neglected or not performed. In addition, the displayed or discussed mutual couplings or direct couplings or communication connections may be implemented through some interfaces. The indirect couplings or communication connections between the devices or units may be implemented in electrical, mechanical, or other forms.

In addition, various functional units in the embodiments of this disclosure may be integrated into one processing unit, or each of the units may exist alone physically. Alternatively, two or more these functional units may be integrated into one unit. The above integrated unit may be implemented in form of hardware, or may be implemented in form of a combination of hardware and software functional unit.

The integrated units implemented in form of software functional unit may be stored in a computer-readable storage medium. The software functional unit is stored in a storage medium, and includes several instructions for instructing a computer device (which may be a personal computer, a server, or a network device) to perform a part of the steps of the transmitting and receiving methods described in the embodiments of this disclosure. The foregoing storage medium includes any medium that can store program code, such as a Universal Serial Bus (USB) flash drive, a removable hard disk, a Read-Only Memory (ROM), a Random Access Memory (RAM), a magnetic disk, or an optical disc.

The above descriptions merely describe optional implementations of this disclosure. It is appreciated, modifications and improvements may be made by a person of ordinary skill in the art without departing from the principle of this disclosure, and these modifications and improvements shall fall within the scope of this disclosure.

**Claims**

1. A method for determining a precoding granularity, comprising:
   determining, by a receiving end device, multiple Physical Resource Blocks (PRBs) as the precoding granularity, in the case that the receiving end device is configured with a combination of one or more of configuration criteria.

2. The method according to claim 1, further comprising:
   determining, by the receiving end device, that a same precoder is used within each Precoding Resource block Group (PRG).

3. The method according to claim 2, wherein in the case that the receiving end device is configured with a combination of one or more of the configuration criteria, a size of the PRG is predefined, or the size of the PRG is configured by network.

4. The method according to any one of claims 1 to 3, wherein the configuration criteria comprise one or more of:

   a system bandwidth;
   a configured bandwidth of the receiving end device;
   a Radio Frequency (RF) channel bandwidth of the receiving end device;
   a size of scheduled PRBs;
   an aggregation level of a control channel;
   a mode of resource mapping;
   a mode of resource mapping from Physical Downlink Control Channel (PDCCH) to Control Channel Element (CCE), only suitable for determining a PRG size of a control channel;
a mode of resource mapping from CCE to Resource Element Group (REG), only suitable for determining a PRG size of a control channel;
a mode of data mapping, only suitable for determining a PRG size of a data channel;
a Multiple-Input Multiple-Output (MIMO) transmission mode;
an Orthogonal Frequency Division Multiplexing (OFDM) waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

5. A method for determining a precoding granularity, comprising:
performing, by a transmitting end device, a precoding operation on signals transmitted to a receiving end device by using the precoding granularity corresponding to multiple Physical Resource Blocks (PRBs), in the case that the receiving end device is configured with a combination of one or more of configuration criteria.

6. The method according to claim 5, further comprising:
determining, by the transmitting end device, that a same precoder is used within each Precoding Resource block Group (PRG) in the precoding on signals transmitted to the receiving end device.

7. The method according to claim 6, wherein in the case that the receiving end device is configured with a combination of one or more of the configuration criteria, a size of the PRG is predefined, or the size of the PRG is configured by network.

8. The method according to any one of claims 5 to 7, wherein the configuration criteria comprise one or more of:

a system bandwidth;
a configured bandwidth of the receiving end device;
a Radio Frequency (RF) channel bandwidth of the receiving end device;
a size of scheduled PRBs;
an aggregation level of a control channel, only suitable for determining a PRG size of the control channel;
a mode of resource mapping;
a mode of resource mapping from Physical Downlink Control Channel (PDCCH) to Control Channel Element (CCE), only suitable for determining a PRG size of a control channel;
a mode of resource mapping from CCE to Resource Element Group (REG), only suitable for determining a PRG size of a control channel;
a mode of data mapping, only suitable for determining a PRG size of a data channel;
a Multiple-Input Multiple-Output (MIMO) transmission mode;
an Orthogonal Frequency Division Multiplexing (OFDM) waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

9. An apparatus for determining a precoding granularity, applied to a receiving end device and comprising:
a first processing module, configured to, in the case that the receiving end device is configured with a combination of one or more of configuration criteria, determine multiple Physical Resource Blocks (PRBs) as the precoding granularity.

10. The apparatus according to claim 9, further comprising:
a second processing module, configured to determine that a same precoder is used within each Precoding Resource block Group (PRG).

11. The apparatus according to claim 10, wherein in the case that the receiving end device is configured with a combination of one or more of the configuration criteria, a size of the PRG is predefined, or the size of the PRG is configured by network.

**12.** The apparatus according to any one of claims 9 to 11, wherein the configuration criteria comprise one or more of:

a system bandwidth;
a configured bandwidth of the receiving end device;
a Radio Frequency (RF) channel bandwidth of the receiving end device;
a size of scheduled PRBs;
an aggregation level of a control channel;
a mode of resource mapping;
a mode of resource mapping from Physical Downlink Control Channel (PDCCH) to Control Channel Element (CCE), only suitable for determining a PRG size of a control channel;
a mode of resource mapping from CCE to Resource Element Group (REG), only suitable for determining a PRG size of a control channel;
a mode of data mapping, only suitable for determining a PRG size of a data channel;
a Multiple-Input Multiple-Output (MIMO) transmission mode;
an Orthogonal Frequency Division Multiplexing (OFDM) waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

**13.** An apparatus for determining a precoding granularity, applied to a transmitting end device and comprising:
a third processing module, configured to, in the case that a receiving end device is configured with a combination of one or more of configuration criteria, perform a precoding operation on signals transmitted to the receiving end device by using the precoding granularity corresponding to multiple Physical Resource Blocks (PRBs).

**14.** The apparatus according to claim 13, further comprising:
a fourth processing module, configured to determine that a same precoder is used within each Precoding Resource block Group (PRG) in the precoding on signals transmitted to the receiving end device.

**15.** The apparatus according to claim 14, wherein in the case that the receiving end device is configured with a combination of one or more of the configuration criteria, a size of the PRG is predefined, or the size of the PRG is configured by network.

**16.** The apparatus according to any one of claims 13 to 15, wherein the configuration criteria comprise one or more of:

a system bandwidth;
a configured bandwidth of the receiving end device;
a Radio Frequency (RF) channel bandwidth of the receiving end device;
a size of scheduled PRBs;
an aggregation level of a control channel, only suitable for determining a PRG size of the control channel;
a mode of resource mapping;
a mode of resource mapping from Physical Downlink Control Channel (PDCCH) to Control Channel Element (CCE), only suitable for determining a PRG size of a control channel;
a mode of resource mapping from CCE to Resource Element Group (REG), only suitable for determining a PRG size of a control channel;
a mode of data mapping, only suitable for determining a PRG size of a data channel;
a Multiple-Input Multiple-Output (MIMO) transmission mode;
an Orthogonal Frequency Division Multiplexing (OFDM) waveform being used;
specific parameters of the OFDM waveform being used;
a signaling format of a control channel, only suitable for determining a PRG size of the control channel;
a quantity of symbols occupied by a control channel, only suitable for determining a PRG size of the control channel; and
a quantity of symbols occupied by a search space, only suitable for determining a PRG size of a control channel.

**17.** A receiving end device, comprising: a first storage, a first processor and a computer program stored on the first storage and configured to be executed by the first processor, wherein the first processor is configured to execute the computer program, to implement steps of the method of determining the precoding granularity according to any one of claims 1 to 4.

**18.** A transmitting end device, comprising: a second storage, a second processor and a computer program stored on the second storage and configured to be executed by the second processor, wherein the second processor is configured to execute the computer program, to implement steps of the method of determining the precoding granularity according to any one of claims 5 to 8.

**19.** A computer-readable storage medium storing therein a computer program, wherein the computer program is configured to be executed by a processor, to implement steps of the method of determining the precoding granularity according to any one of claims 1 to 4, or to implement steps of the method of determining the precoding granularity according to any one of claims 5 to 8.

FIG. 1A

FIG. 1B

FIG. 1C

FIG. 1D

| Time-frequency resource block 1 |
|---|
| Time-frequency resource block 2 |
| Time-frequency resource block 3 |
| Time-frequency resource block 4 |
| Time-frequency resource block 5 |

**TTI**

$\omega_0$

FIG. 2A

| Time-frequency resource block 1 |
|---|
| Time-frequency resource block 2 |
| Time-frequency resource block 3 |
| Time-frequency resource block 4 |
| Time-frequency resource block 5 |

**TTI**

$\omega_0$
$\omega_1$
$\omega_2$
$\omega_3$
$\omega_4$

FIG. 2B

**301**

determining, by a receiving end device, that the precoding granularity is multiple PRBs, in the case that the receiving end device is configured with a combination of one or more of configuration criteria

FIG. 3

System bandwidth
(network side)

RF          channel
bandwidth of UE

Configured
bandwidth of UE

Scheduled RBs

FIG. 4

**501**

performing, by a transmitting end device, a precoding on
signals transmitted to a receiving end device by using a
precoding granularity of multiple PRBs, in the case that the
receiving end device is configured with a combination of one
or more of configuration criteria

FIG. 5

**time-domain-first mapping**

|  | | |
|---|---|---|
| CCE | 0 | 1 |
|  | 2 | 3 |
| PRG#1 | 4 | 5 |
|  | 6 | 7 |
|  | 8 | 9 |
|  | 10 | 11 |
|  | 12 | 13 |
|  | 14 | 15 |
|  |  |  |
|  |  |  |
| *f(frequency domain: RB)* | symbol1 | symbol2 |

*t(time-domain: symbol)*

PRG size =2

FIG. 6A

**time-domain-first mapping**

|  | | | | |
|---|---|---|---|---|
| CCE | 0 | 1 | 2 | 3 |
| PRG#1 | 4 | 5 | 6 | 7 |
|  | 8 | 9 | 10 | 11 |
|  | 12 | 13 | 14 | 15 |
|  | 16 | 17 | 18 | 19 |
|  | 20 | 21 | 22 | 23 |
|  | 24 | 25 | 26 | 27 |
|  | 28 | 29 | 30 | 31 |
|  |  |  |  |  |
|  |  |  |  |  |
| *f(frequency domain:RB)* | symbol1 | symbol2 | symbol3 | symbol4 |

*t(time-domain: symbol)*

PRG size =1

FIG. 6B

**700**

Apparatus of determining
precoding granularity **701**

First processing
module

**702**

Second processing
module

FIG. 7

**800**

Apparatus of determining
precoding granularity

**801**

Third processing
module

**802**

Fourth processing
module

FIG. 8

901

904

First processor

First storage

900

903

902

First bus interface

First transceiver

FIG. 9

1001

1004

Second processor

Second storage

1000

1003

1002

Second bus interface

Second transceiver

FIG. 10

<div align="center">

**INTERNATIONAL SEARCH REPORT**

</div>

| International application No. |
|---|
| PCT/CN2018/074696 |

**A. CLASSIFICATION OF SUBJECT MATTER**

H04B 7/0413 (2017.01) i; H04B 7/0456 (2017.01) i; H04L 25/02 (2006.01) i

According to International Patent Classification (IPC) or to both national classification and IPC

**B. FIELDS SEARCHED**

Minimum documentation searched (classification system followed by classification symbols)

H04B; H04L; H04W

Documentation searched other than minimum documentation to the extent that such documents are included in the fields searched

Electronic data base consulted during the international search (name of data base and, where practicable, search terms used)

CNTXT; CNABS; CNKI; VEN; WOTXT; EPTXT; USTXT: 选择, 配置, 确定, 预编码资源块组, 预编码, 颗粒, 物理资源块绑定, group?, granular+, resource, block?, precod+, physical, bundling size?, aggregat+, map+, PRG, PRB

**C. DOCUMENTS CONSIDERED TO BE RELEVANT**

| Category* | Citation of document, with indication, where appropriate, of the relevant passages | Relevant to claim No. |
|---|---|---|
| X | CN 101931442 A (DATANG MOBILE COMMUNICATIONS EQUIPMENT CO., LTD.), 29 December 2010 (29.12.2010), description, paragraphs [0021]-[0057] | 1-19 |
| X | CN 102948243 A (RESEARCH IN MOTION LIMITED), 27 February 2013 (27.02.2013), description, paragraphs [0042]-[0083]s | 1-19 |
| X | US 2016227520 A1 (INTEL CORPORATION), 04 August 2016 (04.08.2016), description, paragraphs [0047]-[0073] | 1-19 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 April 2018 | 03 May 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer HUANG, Hui Telephone No. 86-(010)-62089455 |
|---|---|

Form PCT/ISA/210 (second sheet) (January 2015)

## INTERNATIONAL SEARCH REPORT
Information on patent family members

| International application No. |
|---|
| PCT/CN2018/074696 |

| Patent Documents referred in the Report | Publication Date | Patent Family | Publication Date |
|---|---|---|---|
| CN 101931442 A | 29 December 2010 | CN 101931442 B | 31 July 2013 |
| CN 102948243 A | 27 February 2013 | EP 2559311 B1 | 07 June 2017 |
| | | CA 2796647 A1 | 20 October 2011 |
| | | JP 2013530565 A | 25 July 2013 |
| | | EP 2559311 A1 | 20 February 2013 |
| | | US 2011255483 A1 | 20 October 2011 |
| | | KR 20120140684 A | 31 December 2012 |
| | | CN 102948243 B | 09 November 2016 |
| | | CA 2796647 C | 25 July 2017 |
| | | WO 2011130115 A1 | 20 October 2011 |
| US 2016227520 A1 | 04 August 2016 | None | |

Form PCT/ISA/210 (patent family annex) (January 2015)

**EP 3 582 405 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710210742